Europäisches Patentamt

European Patent Office

Office européen des brevets

(11) Numéro de publication: **0 236 579**
B1

(12) **FASCICULE DE BREVET EUROPEEN**

(45) Date de publication du fascicule du brevet:
26.09.90

(21) Numéro de dépôt: **86200385.2**

(22) Date de dépôt: **11.03.86**

(51) Int. Cl.⁵: **H04L 27/26**, H04L 5/26

---

(54) **Procédé de transmission de signaux à fréquences déterminées, notamment les signaux de teléimprimeur.**

---

(43) Date de publication de la demande:
**16.09.87 Bulletin 87/38**

(45) Mention de la délivrance du brevet:
**26.09.90 Bulletin 90/39**

(84) Etats contractants désignés:
**AT BE CH DE FR GB IT LI LU NL SE**

(56) Documents cités:
**FR-A- 2 205 779**
**GB-A- 2 091 460**

**RADIO & ELECTRONIC ENGINEERS,**
**vol. 47, no. 10, octobre 1977, pages 435-444, Londres,**
**GB; J.D. RALPHS: "The application of m.f.s.k.**
**techniques to h.f. telegraphy"**

(73) Titulaire: **ACEC, Société Anonyme, Avenue Lloyd**
**George 7, B-1050 Bruxelles(BE)**

(72) Inventeur: **Guillaume, Jean, 13, Rue du Mayeuri,**
**B-6100 Mont-sur-Marchienne(BE)**

(74) Mandataire: **Bosch, Henry et al, Freylinger & Associés**
**Boulevard de la Sauvenière, 85/042, B-4000 Liège(BE)**

---

## Description

La présente invention a pour objet un procédé de transmission de signaux à fréquences déterminées notamment des signaux de téléimprimeur en milieux perturbés.

Il est déjà connu d'émettre des signaux utiles en suites consécutives de cycles à deux moments et de recevoir ces signaux à l'endroit d'un récepteur. Dans le but d'identifier facilement les moments d'émission différents, on a choisi des fréquences différentes émises pendant les deux moments différents. A l'endroit du récepteur, ces signaux ont été détectés au moyen d'un dispositif de détection par exemple des lames vibrantes ou un circuit de détection hautement sélectif et peu amorti. Un tel dispositif fournit une amplitude de sortie croissante pendant la durée de réception de la fréquence sur laquelle il est accordé.

L'invention a pour but de réduire le nombre de fréquences utilisées c'est-à-dire la largeur du spectre émis et d'émettre pendant les deux moments différents des fréquences prises dans un même groupe de fréquences (voir aussi Radio & Electronic Engineers, vol. 47, no. 10, octobre 1977, pages 435–444). Ceci implique une identification précise et fiable des deux moments puisque lors de la réception d'un message, une même fréquence reçue pendant le deuxième moment aura une signification différente de celle reçue pendant le premier moment.

L'invention permet d'identifier avec précision, à l'endroit du récepteur, les deux différents moments d'émission de signaux ; elle est caractérisée en ce qu'on fait précéder l'émission d'un message utile par une séquence de signaux de synchronisation composée d'un certain nombre d'alternances d'émissions d'une fréquence $f_1$ pendant un moment $T_1$ suivie d'une fréquence $f_2$ pendant un moment $T_2$, en ce qu'à la réception, pendant des temps d'attente on maintient débloqué un dispositif de détection $F_1$ accordé sur la fréquence $f_1$, en ce que après la détection d'un signal à la fréquence $f_1$ d'amplitude prédéterminée, on débloque un dispositif de détection $F_2$ accordé sur la fréquence $f_2$ pendant un temps supérieur à la durée du moment $T_1$ et inférieur à la durée de la somme des moments $T_1 + T_2$, en ce qu'on commande ensuite le blocage et le déblocage des dispositifs de détection ($F_1$ $F_2$) approximativement à la cadence des durées des moments $T_1$ et $T_2$, en ce qu'on détermine, dans un microprocesseur M les instants d'apparition de maxima des signaux de sortie des dispositifs de détection $F_1$ et $F_2$ en ce qu'on calcule les instants d'apparition moyens des maxima et en ce qu'on fait coïncider le changement de phase entre les moments $T_1$ et moments $T_2$ avec les dits instants d'apparition moyens des maxima pour l'interprétation des fréquences reçues représentant le message utile.

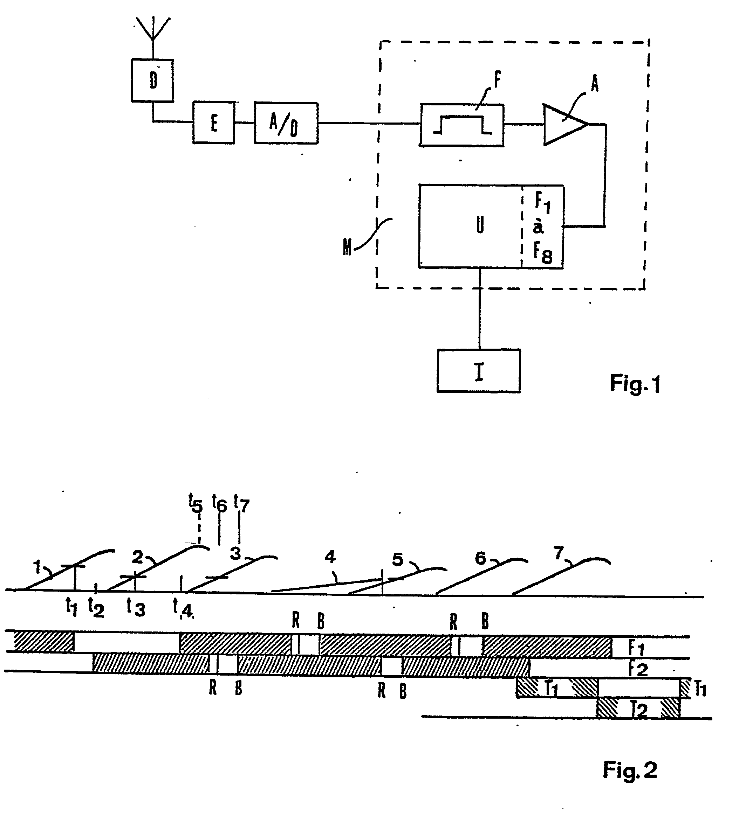

L'invention est expliquée ci-dessous par rapport à un exemple d'une forme d'exécution en se référant au dessin annexé. La figure 1 du dessin est un schéma de principe, la figure 2 est un diagramme montrant l'amplitude de 7 signaux de sortie 1 à 7 de deux filtres $F_1$ et $F_2$ en fonction du temps ainsi que les périodes de déblocage (hachurées) des filtres $F_1$ et $F_2$ et les moments $T_1$ et $T_2$ ajustés après la procédure de mise en phase, suivant l'invention.

Avant le début d'un message, un poste émetteur prévu pour l'émission de signaux par exemple soit à 50 Bauds soit à 100 Bauds émet une séquence de signaux de synchronisation à la vitesse la plus lente. Cette séquence de signaux de synchronisation est composée de deux fréquences différentes $f_1$ et $f_2$ choisies dans le spectre des fréquences transmises (par exemple huit fréquences $f_1$ à $f_8$). La fréquence $f_1$ est émise pendant un nombre déterminé (par exemple 20) de premiers moments $T_1$ alternant avec des deuxièmes moments $T_2$ pendant lesquels on émet la fréquence $f_2$.

A l'endroit d'un poste récepteur, une détection des fréquences émises a lieu, éventuellement après une transformation ou démodulation dans un démodulateur D des signaux radio en signaux à basse fréquence. Si, en l'occurrence, les signaux émis sont choisis dans un spectre de 8 fréquences $f_1$ à $f_8$, le poste récepteur est équipé d'une batterie de 8 filtres $F_1$ à $F_8$ hautement sélectifs pour ces 8 fréquences ; ce peuvent être des dispositifs de détection de tout genre approprié, par exemple des circuits électriques ou des dispositifs tels que des lames vibrantes ou notamment des filtres dits numériques, incorporés dans un microprocesseur M.

Chacun de ces filtres $F_1$ à $F_8$ fournit à sa sortie un signal de même fréquence que le signal d'excitation sur lequel il est accordé. L'enveloppe de ce signal de sortie croît, à partir de zéro, linéairement avec le temps, depuis le début de l'excitation. La rampe de montée linéaire qui est le lieu des crêtes du signal de sortie du filtre arrête de croître lorsque l'excitation disparaît et se met à décroître lentement parce que l'amortissement est faible.

Avant que l'émetteur n'émette un message utile, un signal de synchronisation est émis constitué par un nombre déterminé d'alternances de fréquences $f_1$ et $f_2$ à la cadence de deux moments $T_1$ et $T_2$. Au niveau du poste récepteur, pendant les temps d'attente, un seul des filtres $F_1$ à $F_8$, en l'occurrence $F_1$ est débloqué, capable de recevoir la fréquence $f_1$ marquant le début d'un signal de synchronisation commençant avec un moment $T_1$. Si la fréquence $f_1$ reçue avec une amplitude déterminée au temps $t_1$ correspond bien à celle d'un signal de synchronisation, elle doit être suivie, dans le moment $T_2$ qui suit immédiatement ce premier moment $T_1$, de la réception d'une fréquence $f_2$ à la sortie du filtre $F_2$. Ce filtre $F_2$ est débloqué après l'enregistrement de l'amplitude déterminée du signal de sortie du filtre $F_1$ au temps $t_1$ qui peut correspondre aussi au moment du blocage du filtre $F_1$.

Pour éviter la réception de fréquences $f_1$ dues à des parasites, une amplitude de seuil prédéterminée pour le signal de sortie du filtre $F_1$ doit être atteinte avant l'enregistrement d'une fréquence $f_1$ dans le poste récepteur. Le dit seuil peut être sélectionné dans un analyseur d'amplitude relié au filtre $F_1$ et coopérant avec un microprocesseur M.

De préférence, cependant, le microprocesseur M est utilisé pour toutes les fonctions de détection des fréquences et d'ajustement des moments $T_1$ et

$T_2$ de réception. De ce fait les signaux sortant du démodulateur D ou apparaissant à la sortie de l'antenne du récepteur sont introduits dans un échantillonneur E couplé à un convertisseur A/D analogique-numérique dont les données de sortie sont introduites dans le microprocesseur M. Ce microprocesseur comprend une horloge H dont les impulsions sont fournies aussi à l'échantillonneur E et au convertisseur A/D. Les données traversent ensuite un filtre numétique F à large bande suivi d'un amplificateur limiteur A et entrent ensuite dans une unité de traitement de données U trés complexe. Cette unité de traitement de données comprend un nombre trés grand d'ensembles de filtres dont un ensemble est choisi en fonction des fréquences reçues qui peuvent être décalées quelque peu par rapport aux fréquences émises par l'émetteur. Si dans la suite de l'exposé on parle de filtres $F_1$ à $F_8$, il est évident qu'il s'agit de l'ensemble des filtres choisis capable de détecter les fréquences $f_1$ à $f_8$ émises. L'unité de traitement de données comprend également des analyseurs d'amplitude, des dispositifs de comparaison de signaux, des dispositifs de calcul, des dispositifs de commande de butées de temps etc, soit tout ce qui est nécessaire pour exécuter les fonctions nécessaires de commande, de calcul de sélection et d'interprétation des données.

L'horloge H du microprocesseur bat à une fréquence appropriée, capable de reproduire une fréquence de moments $T_1$, $T_2$ identique à celle des moments $T_1$, $T_2$ de l'émetteur. Si la fréquence des moments $T_1$, $T_2$ est connue à l'endroit du récepteur, leur phase n'est pas connue au début d'un message. Elle doit être déterminée.

Lorsque le microprocesseur enregistre à un temps $t_1$ l'information qu'une fréquence $f_1$ a été reçue par le filtre $F_1$, il commande au temps $t_2$, environ un quart de la durée du moment $T_1$ après le temps $t_1$, le déblocage du filtre $F_2$ Le déblocage du filtre $F_2$ permet de recevoir un signal à la fréquence de $f_2$. Un tel signal est reçu par exemple au temps $t_3$ avec une amplitude prédéterminée. Cette amplitude peut être sélectionnée par le microprocesseur M ; elle peut notamment être plus petite que l'amplitude choisie pour l'enregistrement de la première fréquence $f_1$ au temps $t_1$.

La détection au temps $t_3$ de la fréquence $f_2$ déclenche un dispositif de recherche des maxima des courbes de réponse des filtres incorporé dans le microprocesseur M. Le déblocage du filtre $F_2$ (voir plage hachurée sur le dessin) est donc maintenu au-delà du temps $t_3$ jusqu'à ce que le dispositif de recherche des maxima enregistre le maintien d'une branche descendante de la courbe de réponse du filtre $F_2$. Cette branche descendante est contrôlée par exemple pendant une durée d'environ un cinquième de $T_2$.

Le déblocage du filtre $F_1$ pour l'enregistrement de la fréquence $f_1$ suivante est commandé à un instant $t_4$ qui est déterminé à partir de l'instant $t_1$ après un temps supérieur à la durée du moment $T_1$ et inférieur à la durée de la somme des moments $T_1 + T_2$, Par exemple, si $T_1 = T_2 = 75$ ms, 100 ms après l'instant $t_1$.

Si au moment $t_4$, on n'a pas détecté la présence d'un signal $f_2$ avec une amplitude suffisante, le système est remis en attente comme auparavant.

Si le dispositif de recherche des maxima détermine qu'à un temps $t_5$ un maximum de la courbe de réponse du filtre $F_2$ est apparu, une butée de temps R est fixée par le microprocesseur M pour la suite des opérations, cette butée de temps R est posée au temps $t_6$ à une distance déterminée du temps $t_5$ par exemple un quart de $T_2$ après $t_5$. A partir de ce temps $t_6$ la butée R se répète à la cadence de $T_1$, $T_2$, c'est-à-dire si $T_1 = T_2 = 75$ ms, toutes les 75 ms. La butée R sert de référence pour le calcul ou la détermination des instants où ont lieu les maxima des courbes de réponse des dispositifs de détection $F_1$ ou $F_2$. Elle est normalement suffisamment écartée de l'instant où a lieu un maximum pour que le blocage du dispositif $F_1$ ou $F_2$ ayant fourni le maximum aie lieu avant d'atteindre cette butée R. Une deuxième butée B de déblocage du dispositif de détection suivant est posée au temps $t_7$, un certain temps (par exemple un quart de $T_1$) après le temps $t_6$ et se répète également à la cadence de $T_1$, $T_2$. Aux instants de ces deuxième butées B les dispositifs ou filtres $F_1$, ou respectivement $F_2$ sont débloqués, alors que l'autre filtre n'est pas encore bloqué. Cette situation est appelée à disparaître lorsque la reconnaissance du signal de synchronisation est terminée et que les moments de réception du dispositif récepteur sont mis en phase avec les moments d'émission $T_1$, $T_2$.

Si contrairement au fonctionnement normal prévu, en raison d'une extinction du signal émis ou en raison de bruits excessifs après l'enregistrement d'un premier maximum un des maxima suivants (voir courbe 4 sur le dessin) n'est pas enregistré, la détection du maximum est abandonnée lorsque la butée R est atteinte et le filtre $F_2$ qui aurait dû le fournir est bloqué. Il sera débloqué à nouveau à l'instant de la prochaine butée B.

Le dispositif de recherche des maxima incorporé au microprocesseur M met en mémoire les instants d'apparition des maxima mesurés par rapport à la butée R qui suit et après un certain nombre de maxima par exemple après 10 maxima calcule l'instant moyen d'appariotion d'un maximum mesuré par rapport à la butée R, en éliminant éventuellement une valeur erratique. Le microprocesseur ajuste ensuite sur ces instants d'apparition moyens la phase de commutation des moments $T_1$ et $T_2$ à la réception ou ce qui revient au même le blocage et déblocage des filtres utilisés pendant les moments $T_1$ et $T_2$.

Le poste récepteur est alors en mesure de recevoir un message utile. Grâce aux comparateurs et analyseurs d'amplitude, le microprocesseur M calcule les courbes de réponse des différents filtres $F_1$ à $F_8$ et à l'instant de changement de phase, compare les différentes amplitudes de réponse des filtres et détermine laquelle est la plus grande. Le même calcul est effectué à chaque changement de phase des moments $T_1$, $T_2$ et les fréquences déterminées pour chaque phase dans une paire de moments $T_1$ $T_2$ permettent d'identifier et de commander la frappe d'une lettre dans un téléimprimeur I.

Il peut être avantageux de prévoir un seuil de reconnaissance plus élévé pour la première fréquence $f_1$ reçue lors de l'émission du signal de synchronisation que pour la reconnaissance des fréquences $f_2$ et les fréquences $f_1$ suivantes. Une telle mesure favorise la fiabilité du fonctionnement du récepteur et rend le poste récepteur moins sensible à des mises en route intempestives suite à la réception de parasites.

De même, lorsque dans ces conditions une première fréquence $f_1$ est reçue, non suivie en temps utile c'est-à-dire avant le temps $t_4$ de la réception d'une deuxième fréquence $f_2$, la mise en route de la procédure de détection est interrompue et le poste de réception est à nouveau mis en attente.

## Revendications

1. Procédé de transmission de signaux de fréquences déterminées, notamment signaux de téléimprimeur, dans lequel on émet des messages utiles en suites consécutives de cycles à deux moments $T_1$ et $T_2$ et dans lequel on détecte les signaux reçus au moyen de dispositifs de détection hautement sélectifs pour les fréquences émises, chacun de ces dispositifs de détection fournissant un signal de sortie à amplitude croissante à partir de zéro, commençant avec l'instant où commence l'excitation à son entrée avec un signal à la fréquence sur laquelle le dit filtre est accordé,
caractérisé en ce qu'on fait précéder l'émission d'un message utile par une séquence de signaux de synchronisation composée d'un certain nombre d'alternances d'émissions d'une fréquence $f_1$ pendant un moment $T_1$ suivie d'une fréquence $f_2$ pendant un moment $T_2$,
en ce qu'à la réception, pendant des temps d'attente on maintient débloqué un dispositif de détection ($F_1$) accordé sur la fréquence $f_1$, en ce que après la détection d'un signal à la fréquence $f_1$ d'amplitude prédéterminée, on bloque le dispositif de détection ($F_1$) et on débloque un dispositif de détection ($F_2$) accordé sur la fréquence $f_2$ pendant un temps supérieur à la durée du moment $T_1$ et inférieur à la durée de la somme des moments $T_1 + T_2$,
en ce qu'on commande ensuite le blocage et le déblocage des dispositifs de détection ($F_1$ $F_2$) approximativement à la cadence des durées des moments $T_1$ et $T_2$,
en ce qu'on détermine, dans un microprocesseur M les instants d'apparition de maxima des signaux de sortie des dispositifs de détection ($F_1$ et $F_2$) en ce qu'on calcule les instants d'apparition moyens des maxima et en ce qu'on fait coïncider le changement de phase entre les moments $T_1$ et moments $T_2$ avec les dits instants d'apparition moyens des maxima pour l'interprétation des fréquences ($f_1$ à $f_8$) reçues représentant le message utile.

2. Procédé suivant la revendication 1, caractérisé en ce qu'on remet en position d'attente le poste récepteur si après réception d'une première fréquence $f_1$, on ne reçoit pas une fréquence $f_2$ pendant un temps supérieur à $T_1$ et inférieur à la somme de la durée des moments $T_1 + T_2$.

3. Procédé suivant une des revendications 1 ou 2, caractérisé en ce que le seuil de détection de l'amplitude du premier signal de sortie de la fréquence $f_1$ est plus élevé que le seuil de détection des signaux de sortie de la fréquence $f_2$ et des fréquences $f_1$ suivantes.

## Claims

1. Method for the transmission of signals of fixed frequencies, especially teletypewriter signals, in which useful messages are transmitted in consecutive series of dual-time $T_1$ and $T_2$ cycles and in which the received signals are detected by means of detection devices, highly selective for the transmitted frequencies, each of these detection devices providing an output signal with amplitude increasing from zero, beginning with the instant when the excitation of its input with a signal of the frequency to which the said filter is tuned begins, characterized in that a sequence of synchronization signals composed of a certain number of alternations of transmissions of a frequency $f_1$ for a time $T_1$ followed by a frequency $f_2$ for a time $T_2$ is made to precede the transmission of a useful message, in that on the receiving end, a detection device ($F_1$) tuned to the frequency $f_1$ is kept enabled during latent periods, in that after the detection of a signal of frequency $f_1$ of predetermined amplitude, the detection device ($F_1$) is disabled and a detection device ($F_2$) tuned to the frequency $f_2$ is enabled for a time greater than the duration of the time $T_1$ and less than the duration of the sum of the times $T_1 + T_2$, in that the disabling and enabling of the detection devices ($F_1$ $F_2$) is then controlled approximately at the rate of the durations of the times $T_1$ and $T_2$, in that the instants of appearance of maxima of the output signals of the detection devices ($F_1$ and $F_2$) are determined in a microprocessor M, in that the mean instants of appearance of the maxima are calculated and in that the change of phase between the times $T_1$ and times $T_2$ are made to coincide with the said mean instants of appearance of the maxima in order to interpret the received frequencies ($f_1$ to $f_8$) representing the useful message.

2. Method according to Claim 1, characterized in that the receiver station is returned to a latent state if, after reception of a first frequency $f_1$, a frequency $f_2$ is not received within a time greater than $T_1$ and less than the sum of the duration of the times $T_1 + T_2$.

3. Method according to one of Claims 1 or 2, characterized in that the detection threshold for the amplitude of the first output signal of frequency $f_1$ is higher than the detection threshold of the output signals of frequency $f_2$ and of following $f_1$ frequencies.

## Patentansprüche

1. Verfahren zum Übertragen von Signalen bestimmter Frequenz, insbesondere Fernschreibsignalen, bei dem in aufeinanderfolgenden Folgen von Zyklen mit zwei Zeiten $T_1$ und $T_2$ Nutzinformationen ausgesendet werden, und bei dem die empfangenen Signale mittels Nachweisvorrichtungen nachgewiesen werden, die hochselektiv für die ausgesendeten Frequenzen sind, wobei jede dieser Nachweisvorrichtungen ein Ausgangssignal mit ab Null ansteigender Amplitude liefert, und zwar ab dem Augenblick, in dem die Erregung an ihrem Eingang durch ein Signal mit der Frequenz beginnt, auf die das besagte Filter abgestimmt ist,

dadurch gekennzeichnet, daß vor der Aussendung einer Nutzinformation eine Sequenz von Synchronisationssignalen ausgesendet wird, die aus einer gewissen Anzahl von aufeinanderfolgenden Aussendungen mit der Frequenz $f_1$ während einer Zeit $T_1$ und mit der Frequenz $f_2$ während einer Zeit $T_2$ zusammengesetzt ist;

daß beim Empfang während Bereitschaftszeiten eine auf die Frequenz $f_1$ abgestimmte Nachweisvorrichtung ($F_1$) im freigegebenen Zustand gehalten wird, daß nach dem Nachweis eines Signals mit der Frequenz $f_1$ von vorgegebener Amplitude die Nachweisvorrichtung ($F_1$) gesperrt wird, und eine auf die Frequenz $f_2$ abgestimmte Nachweisvorrichtung ($F_2$) während einer Zeit freigegeben wird, die größer ist als die Zeit $T_1$, und kleiner ist als die Summe $T_1 + T_2$;

daß danach die Sperrung und die Freigabe der Nachweisvorrichtungen ($F_1$, $F_2$) ungefähr entsprechend den Zeiten $T_1$ bzw. $T_2$ gesteuert wird;

daß in einem Mikroprozessor M die Augenblicke des Auftretens von Maxima der Ausgangssignale der Nachweisvorrichtungen ($F_1$ und $F_2$) bestimmt werden, daß die mittleren Augenblicke des Auftretens der Maxima berechnet werden, und daß die Phasenänderung zwischen den Zeiten $T_1$ und $T_2$ mit den besagten mittleren Augenblicken des Auftretens der Maxima in Übereinstimmung gebracht wird zur Interpretation der empfangenen Frequenzen ($f_1$ bis $f_8$), die die Nutzinformation darstellen.

2. Verfahren gemäß Anspruch 1, dadurch gekennzeichnet, daß das Empfangsgerät in die Bereitschaftsposition zurückgestellt wird, wenn nach Empfang einer ersten Frequenz $f_1$ während einer Zeit, die größer als $T_1$ und kleiner als die Summe $T_1 + T_2$ ist, keine Frequenz $f_2$ empfangen wird.

3. Verfahren gemäß einem der Ansprüche 1 oder 2, dadurch gekennzeichnet, daß die Schwelle für den Nachweis der Amplitude des ersten Ausgangssignals mit der Frequenz $f_1$ höher ist als die Schwelle für den Nachweis der Ausgangssignale mit der Frequenz $f_2$ und der folgenden Ausgangssignale mit der Frequenz $f_1$.

EP 0 236 579 B1

Fig. 1

Fig. 2